# EUROPEAN PATENT SPECIFICATION

(11) **EP 1 085 694 B1**
(45) Date of publication and mention of the grant of the patent: **17.01.2007**
(21) Application number: 00120099.7
(22) Date of filing: 15.09.2000
(51) Int. Cl.: H04L 12/24, H04L 29/14, G06F 9/445

(54) **Method for remote management of computer devices**
Verfahren zur Fernverwaltung von Computergeräten
Méthode de gestion à distance de dispositifs d'ordinateur

(30) Priority: 16.09.1999 JP 26257299
(43) Date of publication of application: 21.03.2001
(73) Proprietor: NEC CORPORATION, Tokyo (JP)
(72) Inventor: Hayashi, Yasuhiro, Minato-ku, Tokyo (JP); Kido, Masahiro, Minato-ku, Tokyo (JP)
(74) Representative: Betten & Resch

(56) References cited:
- US-A- 5 497 490
- US-A- 5 745 669
- US-A- 5 778 323
- FOSSA H ET AL: "Interactive configuration management for distributed object systems" ENTERPRISE DISTRIBUTED OBJECT COMPUTING WORKSHOP Y1997. PROCEEDINGS., FIRST INTERNATIONAL GOLD COAST, QLD., AUSTRALIA 24-26 OCT. 1997, LOS ALAMITOS, CA, USA,IEEE COMPUT. SOC, US, 24 October 1997 (1997-10-24), pages 118-128, XP010251291 ISBN: 0-8186-8031-8

## Description

### BACKGROUND OF THE INVENTION

### Field of the Invention

The present invention relates to a method for remote management of computer devices, and especially, relates to a method for unified remote management of computer devices in which the setting information of the computer devices is maintained in an appropriate condition based on a predefined policy.

### Description of the Related Art

In recent years, the importance of computer networks used in business and the like has increased, and the number of computers connected to networks has increased more and more. For such inter-organization computer networks, there is data showing that the cost of managing the computer devices is overwhelmingly large compared to the cost of the computer devices themselves, and there is demand for technology which can efficiently manage at low cost large numbers of computers connected to a network.

Under these circumstances, carrying out unified management of various kinds of setting information of each computer device through the network is very advantageous in terms of cost, and tools for carrying out such unified management have already been developed and applied. Moreover, Japanese Unexamined Patent Application, First Publication No. Hei 9-168009 discloses a tool for unified management which automatically sets the setting information for a large number of devices, and if an error occurs in the automatic setting step, it detects the error, and to avoid a loss of consistency due to an incomplete setting, it restores the setting information to its original value.

The provision of technology which can allow unified management of the setting information of computer devices throughout an entire network as above, on the one hand, is beneficial to the overall system manager who controls the overall network, but because it is also possible to make particular settings for individual computer devices, inappropriate settings may be made as a result of carelessness of the particular manager of an individual computer device, or the settings may be changed by a third party attacking the system.

In other words, despite the importance of always maintaining consistency between the information actually set in the computer devices and the information set by unified management, the prior art is not capable of responding appropriately to inconsistencies that may occur under the conditions described above.

The present invention has been achieved by taking the above circumstances into consideration. Therefore, it is an objective of the present invention to provide a method of remote management of computer devices in which the management device not only simply makes the settings for managed computer devices, but also detects inconsistencies such as those mentioned above, and automatically executes an appropriate corrective measure at the time of detection, and in this way maintains the setting information in an appropriate condition.

FOSSA et al. describes in the paper titled "Interactive configuration management for distributed object systems", IEEE Computer Society, US, October 24, 1997, pages 118 to 128 a system for remote management of bank branch computers. Failures of one of the branch computers is detected and depicted by a software application called Beagle. By storing intended configuration information and comparing this to the state of the actual, running configuration, the Beagle application can indicate failed or unreachable components e.g. by using red color.

### SUMMARY OF THE INVENTION

In order to solve the above problems, the present invention provides a method for remote management of a computer device for maintaining the setting information of a managed computer device connected to a network in an appropriate condition as defined in claim 1.

This method for remote management of a computer device is executed by a management device which is connected to the network. This management device is constituted by a computer system, and its main constituents are a policy manager which is run on a CPU (central processing unit) in the computer system, and a policy database in which the management policy for each managed computer device is recorded.

According to this invention, when there are inconsistencies between the above-mentioned prescribed value and the above-mentioned setting value, it is possible to detect said inconsistencies and to execute a predetermined corrective measure for each item having an inconsistency.

Further, in the method for remote management of a computer device according to the present invention, it is preferable to provide a trigger at constant intervals by means of a timer program operating on the above-mentioned computer connected to a network, and to iteratively execute the above-mentioned first to fifth steps based on said trigger.

This can be realized by providing the above-mentioned policy manager in the above mentioned management device with a timer function. In accordance with this, because the comparative check process is iterated at constant time intervals, it is possible to obtain the effect of continuously monitoring the rewriting of the setting information.

Further, the present invention provides a computer readable recording medium on which is recorded a control program as defined in claim 3.

This recording medium is read by the above-mentioned computer system having the management device, and the program recorded on this recording medium is executed on the CPU in this computer system.

### BRIEF DESCRIPTION OF THE DRAWINGS

Fig. 1 is a block diagram showing the constitution of a management device of one embodiment of the present invention.
Fig. 2 is a flowchart showing the checking procedure for the setting information of the managed computer device of this embodiment.
Fig. 3 shows a practical example of the setting information of a managed computer device, managed according to this embodiment.
Fig. 4 shows a practical example of the setting policy held in the policy database used by this embodiment.
Fig. 5 shows a practical example of the corrective measure policy held in the policy database used by this embodiment.

### DETAILED DESCRIPTION OF THE INVENTION

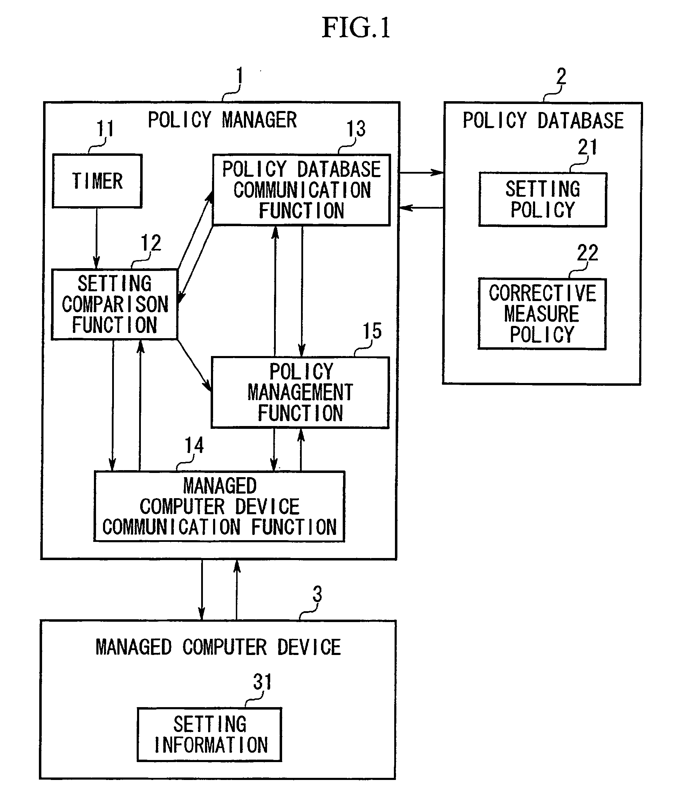

An embodiment of the present invention will be described below with reference to the attached drawings. Fig. 1 is a block diagram showing the constitution of the management device of this embodiment. In this figure, numeral 1 denotes a policy manager which is a constituent of this management device, and 2 denotes a policy database which is also a constituent of the same. Numeral 3 denotes a managed computer device, which is managed by policy manager 1.

In the policy manager 1, numeral 11 denotes a timer, 12 denotes a setting comparison function, 13 denotes a policy database communication function, 14 denotes a managed computer device communication function, and 15 denotes a policy management function. Further, the policy database 2 holds the management policy, and this management policy contains setting policy 21 and corrective measure policy 22. Numeral 31 denotes the setting information of the managed computer device 3. Setting policy 21 is a combination of the prescribed values which should be set for the setting information 31 and the method of setting the same, and the corrective measure policy 22 is information relating to a method for dealing with an inconsistency between the setting information 31 and the prescribed value of the setting policy 21 when such an inconsistency is detected.

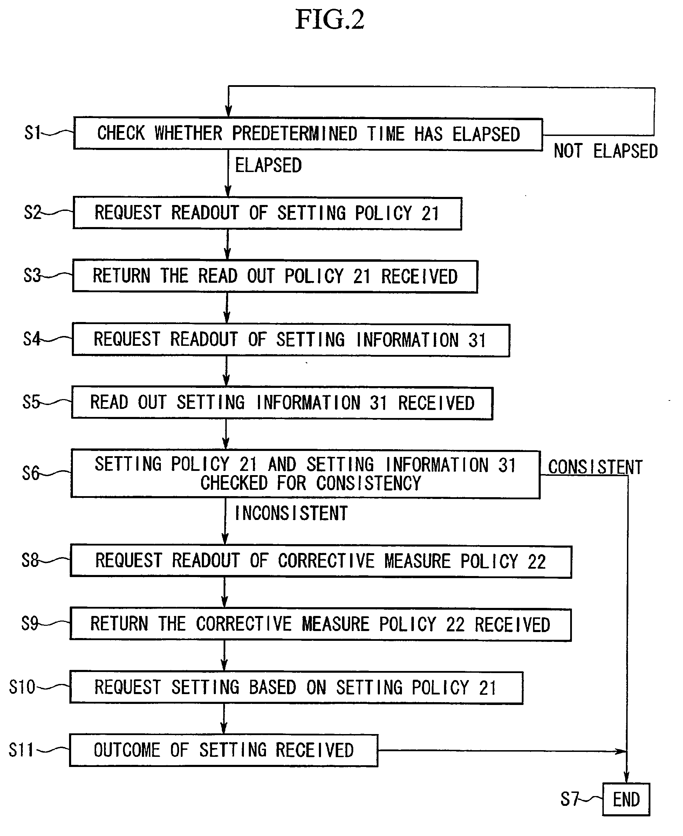

In the following, the operating procedure of the policy manager 1 of the present embodiment is explained. Fig. 2 is a flowchart showing the procedure for the policy manager 1 to check the setting information 31 of the managed computer device 3.

First, in step S1, timer 11 checks whether a preset time has already elapsed since the last time the setting comparison function 12 was activated, and if this time has not elapsed, this check is iterated until this time has elapsed. If the time has elapsed, the timer 11 activates the setting comparison function 12, and the setting comparison function 12, in step S2, requests from the policy database 2 through the policy database communication function 13 a readout of the prescribed value of the setting information 31 of the managed computer device 3 held in the setting policy 21.

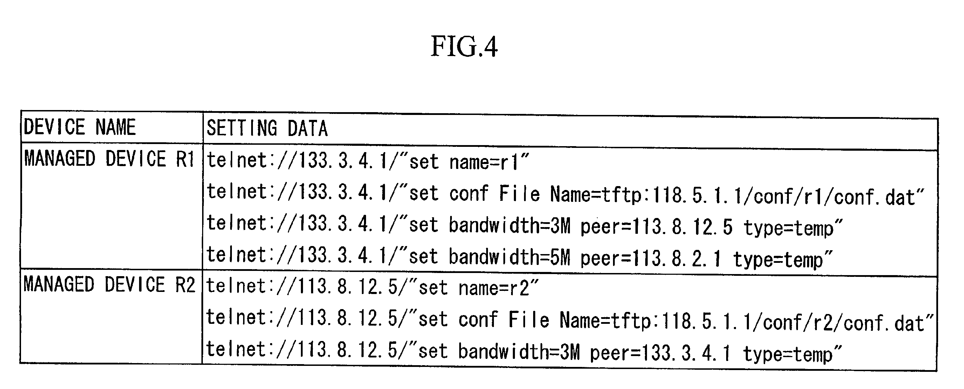

Fig. 4 shows a practical example of the setting policy 21 held in the policy database 2. As can be seen in this figure by looking at the setting data for R1 which is one of the managed computer devices 3, there are the following prescribed values: the device name is "r1", the setting file can be accessed under the name "tftp://118.5.1.1/conf/r1/conf.dat", and for the communication channel to "113.8.12.5", the bandwidth is "3 Mbps" and the mode is "temp (temporary)", and for the communication channel to "113.8.2.1" the bandwidth is "5 Mbps" and the mode is "temp (temporary)". Further, it is also held as information that login to the address "133.3.4.1" is carried out by telnet, and each of the above values should be set by a set command.

The setting comparison function 12, in step S3, receives this information, and based on this information, in step 4, requests a readout of the setting information 31 in the managed computer 3 through the managed computer device communication function 14.

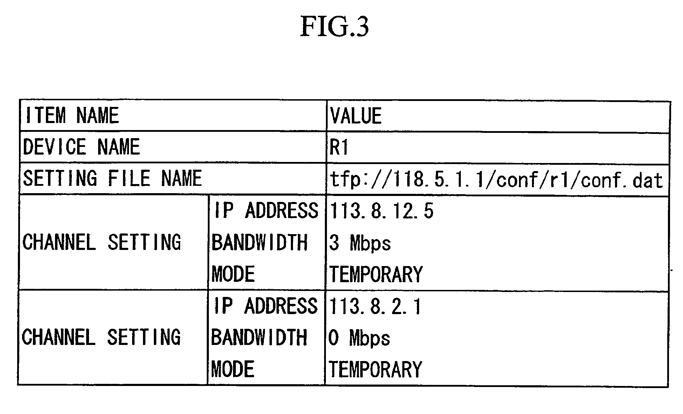

Fig. 3 shows a practical example of the setting information 31 in the managed computer device 3. This setting information 31 is the content actually presently set in the device, and it is shown that the device name is "rl", the setting file name is "tftp://118.5.1.1/conf/r1/conf.dat", for the communication channel to "113.8.12.5" the bandwidth is "3 Mbps" and the mode is "temp (temporary)", and for the communication channel to "113.8.2.1" the bandwidth is "0 Mbps" and the mode is "temp (temporary)".

In step S5, the content of the setting information is sent as a response to the setting comparison function 12, and in step S6, the setting comparison function 12, having received this information, checks for consistency between the content of the setting policy 21 and the setting information 31. If all the items are consistent, the process ends in this way at step S7, and awaits its next activation by the timer 11.

In the comparison in step S6, if even one of the items is inconsistent, the setting comparison function 12 notifies the policy management function 15 of the result of the comparison. Then, in step S8, the policy management function 15, through the policy database communication function 13, requests a readout from the policy database 2 of corrective measure policy 22 for the item having the inconsistency.

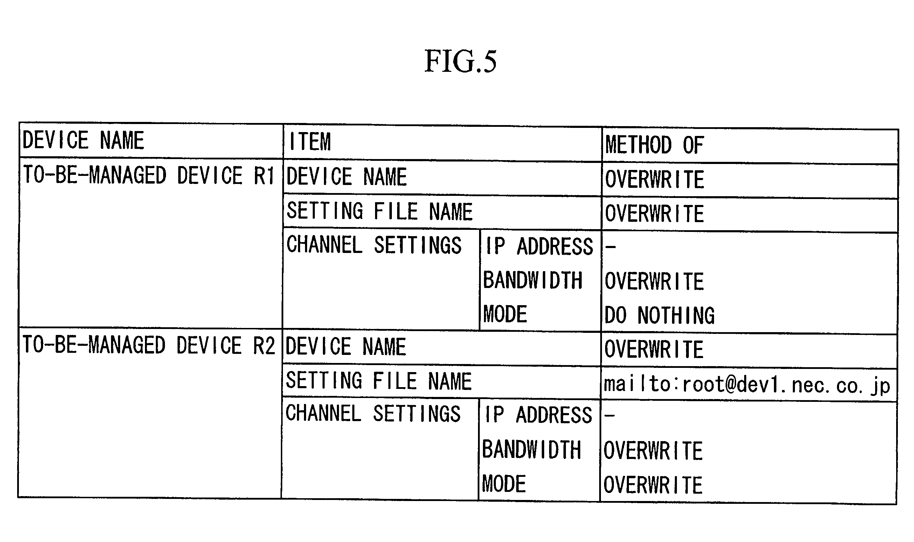

Fig. 5 shows a practical example of the corrective measure policy 22 held in the policy database 2. As shown in the figure, in the corrective measure policy 22, for each individual managed computer device, and for each setting item, a response is defined for the case that an inconsistency is found. For example, it is prescribed that if there is an inconsistency in the device name of the managed device R1, the prescribed value shown in the setting policy 22 overwrites it, if there is an inconsistency in the mode of the managed device R1, no action is taken, and if there is an inconsistency in the setting file name of the managed device R2, a notification to that effect is sent by e-mail to the address "root@dev1.nec.co.jp".

In this way, the corrective measure policy 22 is read out from the policy database 2, and in step S9, is sent as a response to policy management function 15. Next, in step S10, the policy management function 15 requests, through the managed computer device communication function 14, a resetting of the items where the inconsistency was found for the managed computer device 3.

In the case of the present example, the bandwidth for "113.8.2.1" of the device R1 is inconsistent; even though it is prescribed as "5 Mbps" in the setting policy 21, in the actual setting information, it is "0 Mbps". As a result, as shown in Fig. 5, the method for responding to an inconsistency in the bandwidth of the managed device R1 is referred to, and because it is prescribed therein to "overwrite", the proper prescribed value "5 Mbps" overwrites the setting. Furthermore, this overwriting is actually carried out in accordance with the method defined in setting policy 21, i. e., "telnet://133.3.4.1/"set bandwidth=5 M..."".

The policy management function 15, in step S11, receives the results through the managed computer device communication function 14, and in step S11 the current process is stopped.

The above-described policy manager 1 is realized on a computer system. Then, the step of the readout of the setting policy 21 from the above-described policy database 2, the step of the readout of the setting information 31 from the managed computer device 3, the step of comparing the setting policy 21 and the setting information 31, the step of the readout of the corrective measure policy 22 from the policy database 2, and the step of executing the corrective measure are recorded in the form of a program on a storage medium of a computer system, and when this program is read and executed by a computer, the above processes are carried out. Here, the storage medium of the computer system may be a floppy disk, a magneto-optic disk, a CD-ROM, a magnetic hard disk, a semiconductor memory, or the like, but is not limited to these.

As explained above, in the present invention, prescribed values concerning the setting information are held in a policy database, and because the information actually set in the managed computer device is compared with these prescribed values, even if there are inconsistencies due to changes in the setting information on the side of the managed computer device due to carelessness by the manager of the individual device or malicious intent by a third party attacking the device, it is possible to detect these inconsistencies.

Further, when inconsistencies are detected, these inconsistencies are automatically dealt with, referring to a corrective measure policy prescribed in advance and held in a policy database, and it is possible to take an appropriate measure, such as restoring the setting information or notifying the manager by automatically sent mail, in compliance with the prescribed method of response, and it is possible to manage the setting information of the entire system according to the intention of the manager, and in effect it is possible to protect the system from an attack or the like.

Further, because unified management of both the setting policy and the corrective measure policy can be carried out in one place at the policy database, and the above-described checking and corrective measure processes can be carried out by the policy manager over a network, the management of computer devices connected to a network can be efficiently centralized, and the cost of management can be reduced.

## Claims

1. A method for remote management of a computer device for maintaining the setting information (31) of a managed computer device (3) connected to a network in an appropriate condition, wherein setting policy data (21) comprising prescribed setting values and correction measure policy data (22) comprising information for dealing with inconsistencies between the setting policy data (21) and a setting information (31) on the managed computer device (3) are stored in a policy database (2), the method comprising:
a first step of reading out from the policy database (2) a prescribed value which should be set in said managed computer device (3);
a second step of reading out from said managed computer device (3) an actually set setting value from said setting information (31);
a third step of comparing for consistency between said prescribed value and said actually set setting value;
a fourth step of reading out from said policy database (2) a corrective measure for an inconsistency in accordance with the corrective measure policy data (22), when an inconsistency is found in said third step; and
a fifth step of executing the corrective measure obtained in said fourth step.

2. The method for remote management for a computer device according to claim 1, wherein a trigger is provided at constant time intervals by a timer program (11) running on said computer connected to said network and said first to fifth steps are iteratively executed based on the trigger.

3. A computer-readable storage medium on which a control program for controlling a remote management device (1) for maintaining the setting information of a managed computer device (3) connected to a network in an appropriate condition is recorded, said program causing the remote management device (1) to perform all the steps of the method as claimed in claim 1.

4. A control program for controlling a remote management device (1) for maintaining the setting information of a managed computer device (3) connected to a network in an appropriate condition is recorded, said program causing the remote management device (1) to perform all the steps of the method as claimed in claim 1.

## Patentansprüche

1. Verfahren für das Fernmanagement einer Computervorrichtung, um Einstellinformationen (31) einer mit einem Netz verbundenen gemanagten Computervorrichtung (3) in einem geeigneten Zustand zu halten, wobei Einstellstrategie-Daten (21), die vorgeschriebene Einstellwerte umfassen, und Korrekturmaßnahmenstrategie-Daten (22), die Informationen für die Handhabung von Inkonsistenzen zwischen den Einstellstrategie-Daten (21) und Einstellinformationen (31) über die gemanagte Computervorrichtung (3) umfassen, in einer Strategiedatenbank (2) gespeichert sind, wobei das Verfahren umfasst:
einen ersten Schritt des Auslesens eines vorgeschriebenen Wertes, der in der gemanagten Computervorrichtung (3) gesetzt sein sollte, aus der Strategiedatenbank (2);
einen zweiten Schritt des Auslesens eines momentan gesetzten Einstellwerts in den Einstellinformationen (31) aus der gemanagten Computervorrichtung (3);
einen dritten Schritt des Vergleichens auf eine Konsistenz zwischen dem vorgeschriebenen Wert und dem momentan gesetzten Einstellwert;
einen vierten Schritt des Auslesens einer Korrekturmaßnahme für eine Inkonsistenz in Übereinstimmung mit den Korrekturmaßhahmenstrategie-Daten (22) aus der Strategiedatenbank (2), wenn in dem dritten Schritt eine Inkonsistenz festgestellt wird; und
einen fünften Schritt des Ausführens der Korrekturmaßnahme, die im vierten Schritt erhalten wurde.

2. Verfahren für das Fernmanagement einer Computervorrichtung nach Anspruch 1, bei dem durch ein Zeitgeberprogramm (11), das auf dem mit dem Netz verbundenen Computer läuft, in konstanten Zeitintervallen ein Trigger bereitgestellt wird und die ersten bis fünften Schritte anhand des Triggers iterativ ausgeführt werden.

3. Computerlesbares Speichermedium, auf das ein Steuerprogramm zum Steuern einer Fernmanagement-Vorrichtung (1), auf dem die Einstellinformationen einer mit einem Netz verbundenen gemanagten Computervorrichtung (3) in einem geeigneten Zustand aufgezeichnet sind, wobei das Programm die Fernmanagement-Vorrichtung (1) dazu veranlasst, alle Schritte des Verfahrens nach Anspruch 1 auszuführen.

4. Steuerprogramm zum Steuern einer Fernmanagement-Vorrichtung (1) zum Halten der Einstellinformationen einer mit einem Netz verbundenen gemanagten Computervorrichtung (3) in einem geeigneten Zustand, wobei das Programm die Fernmanagement-Vorrichtung (1) dazu veranlasst, alle Schritte des Verfahrens nach Anspruch 1 auszuführen.

## Revendications

1. Procédé de gestion à distance d'un dispositif d'ordinateur pour maintenir les informations de paramétrage (31) d'un dispositif d'ordinateur administré (3) connecté à un réseau dans une condition appropriée, dans lequel des données de politique de paramétrage (21) comprenant des valeurs de paramétrage prescrites et des données de politique de mesure de correction (22) comprenant des informations pour traiter des incohérences entre les données de politique de paramétrage (21) et des informations de paramétrage (31) sur le dispositif d'ordinateur administré (3) sont enregistrées dans une base de données de politique (2), le procédé comprenant :
une première étape consistant à lire, à partir de la base de données de politique (2), une valeur prescrite qui doit être paramétrée dans ledit dispositif d'ordinateur administré (3) ;
une deuxième étape consistant à lire, à partir dudit dispositif d'ordinateur administré (3), une valeur de paramétrage effectivement paramétrée à partir desdites informations de paramétrage (31) ;
une troisième étape consistant à comparer une cohérence entre ladite valeur prescrite et ladite valeur de paramétrage effectivement paramétrée ;
une quatrième étape consistant à lire, à partir de ladite base de données de politique (2), une mesure de correction pour une incohérence en accord avec les données de politique de mesure de correction (22), quand une incohérence est trouvée au cours de ladite troisième étape ; et
une cinquième étape consistant à appliquer la mesure de correction obtenue au cours de ladite quatrième étape.

2. Procédé de gestion à distance d'un dispositif d'ordinateur selon la revendication 1, dans lequel un déclenchement est fourni à des intervalles de temps constants par un programme minuteur (11) en cours d'exécution sur ledit ordinateur connecté au dit réseau, et ladite première à ladite cinquième étapes sont exécutées de façon itérative sur la base du déclenchement.

3. Support de stockage lisible par un ordinateur sur lequel un programme de commande pour commander un dispositif de gestion à distance (1) pour maintenir les informations de paramétrage d'un dispositif d'ordinateur administré (3) connecté à un réseau dans une condition appropriée est enregistré, ledit programme amenant le dispositif de gestion à distance (1) à exécuter toutes les étapes du procédé selon la revendication 1.

4. Programme de commande pour commander un dispositif de gestion à distance (1) pour maintenir les informations de paramétrage d'un dispositif d'ordinateur administré (3) connecté à un réseau dans une condition appropriée est enregistré, ledit programme amenant le dispositif de gestion à distance (1) à exécuter toutes les étapes du procédé selon la revendication 1.
